# EUROPEAN PATENT APPLICATION

(11) **EP 4 589 694 A1**
(43) Date of publication of application: **23.07.2025**
(21) Application number: 24781284.5
(22) Date of filing: 29.03.2024
(51) Int. Cl.: H01M 4/62, H01M 4/133, H01M 4/134, H01M 4/131, H01M 4/38, H01M 4/48, H01M 4/587, H01M 10/0525

(54) **ANODE COMPOSITION FOR LITHIUM ION SECONDARY BATTERY, ANODE SLURRY, ANODE, AND LITHIUM ION SECONDARY BATTERY**

(30) Priority: 31.03.2023 KR 20230042670; 28.03.2024 KR 20240042404
(71) Applicant: LG Energy Solution, Ltd., Seoul 07335 (KR)
(72) Inventor: KO, Minjin, Daejeon 34122 (KR); KIM, Young Jae, Daejeon 34122 (KR); JUN, Chan Soo, Daejeon 34122 (KR); KWON, Yohan, Daejeon 34122 (KR); LEE, Jaewook, Daejeon 34122 (KR)
(74) Representative: Hoffmann Eitle
(86) International application number: PCT/KR2024/004014
(87) International publication number: WO 2024/205294

(57) **Abstract**

The present application relates to a negative electrode composition for a lithium ion secondary battery, including a negative electrode active material, a conductive material, and an aqueous binder, and is characterized in that the conductive material includes a pre-dispersion solution containing a specific type of dispersant and the aqueous binder includes a specific content of (meth)acrylamide (AM). Further, the present application relates to a negative electrode slurry including a negative electrode composition for a lithium ion secondary battery, a negative electrode for a lithium ion secondary battery, and a lithium ion secondary battery. The negative electrode composition for a lithium ion secondary battery may contribute to improving phase stability and suppressing volume expansion according to the charging and discharging of a battery.

## Description

### [Technical Field]

The present application relates to a negative electrode composition for a lithium ion secondary battery, a negative electrode slurry, a negative electrode, and a lithium ion secondary battery.

This application claims priority to and the benefit of Korean Patent Application Nos. 10-2023-0042670 and 10-2024-0042404 filed in the Korean Intellectual Property Office on March 31, 2023 and March 28, 2024, respectively, the entire contents of which are incorporated herein by reference.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

Meanwhile, as technology development of and demand for mobile devices have increased, demands for secondary batteries have been rapidly increased. Accordingly, lithium ion secondary batteries having characteristics of high energy density and voltage, long cycle life, and low self-discharge rate have been commercialized and widely used. Accordingly, as an electrode for a high capacity lithium ion secondary battery, studies have been actively conducted in order to prepare an electrode having a high energy density per unit volume.

Generally, a secondary battery is composed of a positive electrode, a negative electrode, an electrolyte, and a separator, and in particular, the negative electrode includes a negative electrode active material, and silicon-based particles with large charge and discharge capacities may be used as the negative electrode active material.

In particular, recently, in response to the demand for a secondary battery having an electrode with a high energy, studies have been actively conducted on a method for increasing the capacity by together using a silicon-based compound such as Si/C, SiOx (x=0), or SiOx (0 < x < 2), which has a 10-fold or higher capacity than a graphite-based material, as a negative electrode active material. However, compared to existing graphite-based materials, silicon-based compounds have a problem in that due to the generation of hydrogen gas in the repeated charging and discharging process, the volume expands to block the conductive path, thereby causing the battery characteristics to deteriorate.

In order to solve the volume expansion caused by the above-described repeated charging and discharging process, studies have also been conducted on the composition of binders, and as a result, studies have been conducted on binder polymers having strong stress. However, these binder polymers alone have limitations in preventing an increase in electrode thickness due to contraction and expansion of a negative electrode active material and a deterioration in the performance of a lithium ion secondary battery derived therefrom.

In addition, in order to secure the conductivity of the negative electrode, the secondary battery further includes a conductive material. Although carbon black and the like have been mainly used in the related art, single-walled carbon nanotubes (SWCNTs) with a thin and elongated shape have been used in order to improve the capacity of the secondary battery.

However, when single-walled carbon nanotubes are used as a conductive material, the single-walled carbon nanotubes need to be used in the form of a dispersion solution of single-walled carbon nanotubes in order to uniformly arrange the single-walled carbon nanotubes in an active material layer. However, as the degree of dispersion of the dispersion solution increases, the density difference between a conductive material including the dispersion solution and an active material deepens, resulting in a migration in which the conductive material moves from a current collector to an upper layer, so that there is a problem in that the phase stability, conductivity, and the like of a negative electrode composition deteriorate.

Accordingly, in order to improve battery characteristics while controlling the dispersion of the SWCNTs, various methods are being discussed in terms of changing the constituent components of the negative electrode composition.

### [Detailed Description of the Invention]

### [Technical Problem]

The present inventors have found that by using single-walled carbon nanotubes (SWCNTs) as the conductive material, adopting a non-ionic vinyl-based compound as a dispersant in order to control the compatibility and dispersibility with the conductive material, and adopting an aqueous binder including (meth)acrylamide in a specific content in order to further improve the dispersibility, volume expansion problems of a negative electrode, cycle performance problems, and the like may be ultimately solved.

The present specification has been made in an effort to provide a negative electrode composition for a lithium ion secondary battery, in which by using a specific type of dispersant and an aqueous binder containing (meth)acrylamide in a specific content, the dispersibility of single-walled carbon nanotubes is controlled and the volume expansion problem of a negative electrode is ameliorated, and a negative electrode slurry, a negative electrode, and a lithium ion secondary battery, which include the same.

### [Technical Solution]

An exemplary embodiment of the present specification provides a negative electrode composition for a lithium ion secondary battery, including: a negative electrode active material; a conductive material; and an aqueous binder, in which the conductive material includes a pre-dispersion solution containing single-walled carbon nanotubes (SWCNTs) and a dispersant, the aqueous binder includes (meth)acrylamide (AM) in an amount of 30 wt% or more and 80 wt% or less with respect to 100 wt% of the entire aqueous binder, and the dispersant includes a non-ionic vinyl-based compound.

In another exemplary embodiment, provided is a negative electrode slurry including the negative electrode composition for a lithium ion secondary battery and a solvent.

In still another exemplary embodiment, provided is an electrode including: a current collector layer; and a negative electrode active material layer provided on one surface or both surfaces of the current collector layer, in which the negative electrode active material layer includes the negative electrode slurry or a dried material thereof.

Finally, provided is a lithium ion secondary battery including: a first electrode; a second electrode; a separator interposed between the first electrode and the second electrode; and an electrolyte, in which any one of the first electrode and the second electrode is the negative electrode.

### [Advantageous Effects]

The negative electrode composition for a lithium ion secondary battery according to an exemplary embodiment of the present invention can provide a lithium ion secondary battery with high performance and long service life characteristics in the future by controlling the dispersibility of single-walled carbon nanotubes in a conductive material, using an aqueous binder containing (meth)acrylamide having high strength characteristics to improve the compatibility and/or phase stability between a conductive material and an aqueous binder, and preventing the volume expansion of a negative electrode active material.

Furthermore, since the negative electrode slurry, negative electrode, and lithium ion secondary battery according to an exemplary embodiment of the present invention include the negative electrode composition for a lithium ion secondary battery, the above-described effects are exhibited as they are, and accordingly, the safety and stability of the lithium ion secondary battery can be secured.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, when x parts by weight is based on 100 parts by weight, wt% may also be used for the unit.

In the present specification, the fact that a polymer includes a monomer as a repeating unit means that the monomer participates in a polymerization reaction, and thus is included as a repeating unit in the polymer.

In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material.

In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

### <Negative electrode composition for lithium ion secondary battery>

An exemplary embodiment of the present specification provides a negative electrode composition for a lithium ion secondary battery, including: a negative electrode active material; a conductive material; and an aqueous binder, in which the conductive material includes a pre-dispersion solution including single-walled carbon nanotubes (SWCNTs) and a dispersant, the aqueous binder includes (meth)acrylamide (AM) in an amount of 30 wt% or more and 80 wt% or less with respect to 100 wt% of the entire aqueous binder, and the dispersant includes a non-ionic vinyl-based compound.

The negative electrode composition for a lithium ion secondary battery according to an exemplary embodiment of the present invention can provide a lithium ion secondary battery with high performance and long service life characteristics in the future by controlling the dispersibility of single-walled carbon nanotubes in a conductive material, using an aqueous binder containing (meth)acrylamide having high strength characteristics to improve the compatibility and/or phase stability between a conductive material and an aqueous binder, and preventing the volume expansion of a negative electrode active material.

The negative electrode composition for a lithium ion secondary battery according to the exemplary embodiments may improve phase stability and mechanical properties and further improve cycle and/or service life performance in terms of a battery in the future by satisfying the content range of (meth)acrylamide, which is a first repeating unit.

In the present specification, the term "(meth)acrylamide" may include methacrylamide or acrylamide.

In the present specification, the aqueous binder may further include (meth)acrylic acid (AA) in addition to (meth)acrylamide.

In the present specification, the aqueous binder may additionally include (meth)acrylonitrile in addition to (meth)acrylamide and (meth)acrylic acid.

In the present specification, the aqueous binder means a binder based on water as a solvent or electrolytic solution.

In the present specification, unless otherwise specified, the aqueous binder means a copolymer including two or more repeating units.

In the present specification, the copolymer is a concept that includes all alternating copolymers, random copolymers, block copolymers, and graft copolymers, unless otherwise specified.

According to an exemplary embodiment of the present specification, the pre-dispersion solution may include more than 0 part by weight and 1 part by weight or less of single-walled carbon nanotubes having a length of more than 0 µm and less than 0.2 µm and 15 parts by weight or more of single-walled carbon nanotubes having a length of 10 µm or more and less than 100 µm with respect to 100 parts by weight of the entire single-walled carbon nanotubes.

The negative electrode composition for a lithium ion secondary battery of the exemplary embodiments may control dispersibility and efficiently improve conductivity. Specifically, when the single-walled carbon nanotubes having a length of more than 0 µm and less than 0.2 µm are present in an amount of 1 part by weight or less with respect to 100 parts by weight of the entire single-walled carbon nanotubes, it is possible to suppress damage to single-walled carbon nanotubes caused by excessive pre-dispersion and prevent deterioration in the connection performance of a conductive networks, and as long as the content of the single-walled carbon nanotubes having a length of 10 µm or more and less than 100 µm satisfies 15 parts by weight or more with respect to 100 parts by weight of the entire single-walled carbon nanotubes, during charging and discharging, the service life may be improved due to the excellent connectivity of the conductive network caused by the volume expansion of the electrode during charging and discharging.

In the present specification, the pre-dispersion solution may be prepared by adding single-walled carbon nanotubes and a dispersant (additionally, a dispersion medium, a viscosity modifier, and the like) and mixing the resulting mixture, and milling the mixture.

In the present specification, the pre-dispersion solution is prepared by a method of preparing single-walled carbon nanotubes and then preparing the pre-dispersion solution using a high-pressure homogenizer, and the like.

In the present specification, "100 parts by weight of entire single-walled carbon nanotubes" means being based on a solid, in other words, the solid component of the pre-dispersion solution. The basis of parts by weight based on the solid content and a solid content of each component may be measured by a general analysis means used in the art, such as liquid chromatography or gas chromatography.

In the present specification, for the milling, it is possible to perform a milling method using a ball mill, a bead mill, a disc mill, a basket mill, or a high-pressure homogenizer, and preferably, it is possible to use a high-pressure homogenizer capable of effectively achieving dispersion without causing damage to the single-walled carbon nanotubes.

In the present specification, milling by a high-pressure homogenizer may be performed by pressurizing a mixture using, for example, a plunger pump of the high-pressure homogenizer, pushing the mixture out into the gap of a homogenization valve, and forces such as cavitation, shear, impact, and explosion when the mixture is passed through the gap.

In the present specification, the particle size of single-walled carbon nanotubes (SWCNTs) may be measured by a particle size analyzer (manufactured by Malvern Panalytical Ltd.) using a laser diffraction method. The laser diffraction method generally enables the measurement of a particle size (particularly, a length) over a wide range from submicron to several mm, and may obtain highly reproducible and highly resolvable analysis results.

In an exemplary embodiment of the present specification, the negative electrode active material may include one or more selected from the group consisting of a silicon-based active material and a carbon-based active material.

In another exemplary embodiment of the present specification, the negative electrode active material may be a silicon-based active material.

By including a silicon-based active material as a negative electrode active material, the negative electrode composition for a lithium ion secondary battery according to the exemplary embodiments can have a 10-fold or higher capacity than that of the carbon-based active material. Accordingly, when a silicon-based active material is applied to a negative electrode, it is possible to implement an electrode that is thinner and has a higher level of energy density than when a carbon-based active material is included alone.

In still another exemplary embodiment of the present specification, the negative electrode active material may include a silicon-based active material and a carbon-based active material.

In yet another exemplary embodiment of the present specification, when the negative electrode active material includes a silicon-based active material and a carbon-based active material, the weight ratio between the silicon-based active material and the carbon-based active material may be in a range of 2 : 98 to 30 : 70.

The negative electrode active material according to the exemplary embodiment includes a carbon-based active material as a main component, and thus may further provide an effect in which swelling slightly occurs due to the small volume expansion of the active material during charging and discharging and the conductive connectivity of the negative electrode is excellent.

In an exemplary embodiment of the present specification, the silicon-based active material may include one or more of SiOx (x=0), SiOx (0<x<2), SiC, and a Si alloy.

In the present specification, the case of SiO₂ where x is 2 in the SiOx is not included, but this SiO₂ does not react with lithium ions, and thus cannot store lithium. Therefore, it is preferred that x falls within the range of the exemplary embodiment.

In the present specification, the silicon-based active material may be Si/C composed of a composite of Si and C, or Si.

In the present specification, two or more of the silicon-based active materials may be used in mixture.

In an exemplary embodiment of the present specification, the negative electrode active material may be present in an amount of 60 parts by weight or more based on 100 parts by weight of the negative electrode composition for a lithium ion secondary battery.

In an exemplary embodiment of the present specification, the negative electrode active material may be present in an amount of 60 parts by weight or more, preferably 65 parts by weight or more, more preferably 70 parts by weight or more, and 95 parts by weight or less, preferably 90 parts by weight or less, based on 100 parts by weight of the negative electrode composition for a lithium ion secondary battery.

In the present specification, the silicon-based active material may be present, for example, in a crystalline or amorphous form. Specifically, the silicon particles of the silicon-based active material may be preferably spherical particles, but are not limited thereto.

In an exemplary embodiment of the present specification, when the negative electrode active material is composed of a silicon-based active material alone, the silicon-based active material includes one or more selected from the group consisting of SiOx (x=0) and SiOx (0<x<2), and may include 70 parts by weight or more of the SiOx (x=0) based on 100 parts by weight of the silicon-based active material.

In another exemplary embodiment, the silicon-based active material may include the SiOx (x=0) in an amount of 70 parts by weight or more, preferably 80 parts by weight or more, and more preferably 90 parts by weight or more, or 100 parts by weight or less, preferably 99 parts by weight or less, and more preferably 95 parts by weight or less, based on 100 parts by weight of the silicon-based active material.

In another exemplary embodiment of the present invention, when the silicon-based active material includes SiOx (x=0), SiOx (x=0) may have an average particle diameter (D₅₀) of 3 µm to 10 µm.

When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

The particle size of the negative electrode active material may be adjusted by a method such as a ball mill, a jet mill, or an air current classification, and the method is not limited thereto.

In the present specification, "Dₙ" means the particle size distribution, and means the particle diameter at the n% point of the cumulative distribution of the number of particles according to the particle diameter. That is, D₅₀ is the particle diameter (average particle diameter) at the 50% point of the cumulative distribution of the number of particles according to the particle diameter, D₉₀ is the particle diameter at the 90% point of the cumulative distribution of the number of particles according to the particle diameter, and D₁₀ is the particle diameter at the 10% point of the cumulative distribution of the number of particles according to the particle diameter. Meanwhile, the particle size distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In an exemplary embodiment of the present specification, the carbon-based active material may include at least one selected from the group consisting of artificial graphite, natural graphite, hard carbon, and soft carbon.

In an exemplary embodiment of the present specification, the conductive material may be present in an amount of 0.03 parts by weight or more and 40 parts by weight or less based on 100 parts by weight of the negative electrode composition.

In another exemplary embodiment of the present specification, the conductive material may be included in an amount of 0.03 parts by weight or more and 40 parts by weight or less, preferably 0.05 parts by weight or more and 30 parts by weight or less, and more preferably 0.5 parts by weight or more and 25 parts by weight or less, based on 100 parts by weight of the negative electrode composition.

In the present specification, the conductive material; and the aqueous binder included in the negative electrode composition for a lithium ion secondary battery may mean a negative electrode conductive material; and a negative electrode aqueous binder, respectively.

In the present specification, the negative electrode conductive material has a completely different configuration from a positive electrode conductive material applied to the positive electrode. That is, the negative electrode conductive material according to the present application serves to capture a contact point between silicon-based active materials in which the volume expansion of the negative electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

In addition, the negative electrode conductive material according to the present application may have a configuration that is completely different from that of a conductive material applied to a graphite-based active material (that is, including only graphite among carbon-based active materials) when a silicon-based active material is included in the negative electrode active material. That is, the conductive material used for the negative electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In the present specification, the fact that a carbon-based active material is used as an active material means that the carbon-based active material is processed into a dot or spherical shape and used as a material that serves to store or release lithium.

That is, in an exemplary embodiment of the present application, artificial graphite or natural graphite, which is a carbon-based active material is in a dot form, and the BET specific surface area thereof may satisfy a range of 0.1 m²/g or more and 4.5 m²/g or less. In addition, plate-like graphite, which is a planar conductive material, is in a planar form, and may have a BET specific surface area of 5 m²/g or more.

In an exemplary embodiment of the present invention, the non-ionic vinyl-based compound may be one or more selected from the group consisting of polyvinyl pyrrolidone (PVP) and polyvinyl butyral (PVB). Preferably, the dispersant may be polyvinyl pyrrolidone (PVP).

When the aforementioned dispersant is used in a negative electrode composition for a lithium ion secondary battery, the phase stability is improved during the preparation of a negative electrode slurry in the future, and accordingly, the service life performance of the negative electrode including the negative electrode slurry may be improved.

In particular, among non-ionic vinyl-based compounds, PVP has excellent solubility in water and excellent mutual adhesion strength with SWCNTs, and may respond to the changes in pH according to the change in composition in the slurry according to the type and content of aqueous binder and conductive material, so that the phase stability is characterized by being excellent because PVP is not sensitive to interactions with single-walled carbon nanotubes (SWCNTs).

In another embodiment of the present invention, the dispersant may further include an elastomer, such as hydrogenated nitrile butadiene rubber (H-NBR).

In still another exemplary embodiment of the present invention, the dispersant may be present in an amount of 0.5 parts by weight or more and 5 parts by weight or less based on 100 parts by weight of the negative electrode composition.

In yet another exemplary embodiment of the present invention, the dispersant is used for the purpose of dispersing the SWCNT conductive material, and the upper limit thereof is not particularly limited, the dispersant can be used to the extent that the dispersant does not affect the physical properties of the binder, and preferably, the upper limit thereof is preferably 20 parts by weight or less, or 10 parts by weight or less with respect to 100 parts by weight of the binder. The lower limit of the dispersant is preferably 20 parts by weight or more, preferably 50 parts by weigh or more, 100 parts by weight or more, and preferably 150 parts by weight or more with respect to 100 parts by weight of SWCNTs. When the dispersant is present in an amount less than 20 parts by weight based on 100 parts by weight of SWCNTs, it may be difficult to effectively disperse SWCNTs, and the dispersion stability after dispersion may deteriorate.

In an exemplary embodiment of the present invention, the aqueous binder may be a copolymer including (meth)acrylamide (AM) as a first repeating unit and (meth)acrylic acid (AA) as a second repeating unit.

When the copolymer is included as an aqueous binder, the solubility in a solvent (solvent used during the preparation of a slurry) may be additionally improved.

In another exemplary embodiment of the present invention, when the aqueous binder is a copolymer composed of two repeating units of (meth)acrylamide (AM) and (meth)acrylic acid (AA), the weight ratio of AM : AA may be 30 to 80 : 20 to 70.

When the weight ratio is satisfied, the aqueous binder secures improved mechanical properties and cycle characteristics, and may control dispersibility with single-walled carbon nanotubes (SWCNTs). Furthermore, when the weight ratio is satisfied, the aqueous binder may additionally improve solubility in a solvent (for example, water as a solvent used during the preparation of a slurry).

In an exemplary embodiment of the present invention, the aqueous binder may be a copolymer further including (meth)acrylonitrile (AN) as a third repeating unit. In other words, the aqueous binder may be a copolymer including the (meth)acrylamide (AM)-derived first repeating unit, the (meth)acrylic acid (AA)-derived second repeating unit, and a (meth)acrylonitrile (AN)-derived third repeating unit.

According to the exemplary embodiments, the solubility and/or dispersibility in the solvent (solvent used during the preparation of a slurry) may be additionally improved, and the adhesive properties may be additionally improved.

In another exemplary embodiment of the present invention, when the aqueous binder is a terpolymer including three repeating units of (meth)acrylamide (AM), (meth)acrylic acid (AA), and (meth)acrylonitrile (AN), the weight ratio of AM : AA : AN may be 30 to 80 : 10 to 40 : 10 to 30.

Since the aqueous binder satisfying the above weight ratio may secure improved mechanical properties and cycle characteristics and control dispersibility with single-walled carbon nanotubes (SWCNTs), the network connectivity may be improved. Further, the aqueous binder satisfying the above weight ratio may additionally improve solubility in a solvent (for example, water as a solvent used during the preparation of a slurry). In addition, when the above weight ratio is satisfied, the adhesion characteristics may be improved.

In the present specification, a polymerization initiator is used to prepare the aqueous binder (copolymer), and ammonium persulfate may be used as an example of the polymerization initiator, but the polymerization initiator is not limited thereto.

In the present specification, in order to prepare the aqueous binder, a copolymer is prepared, and then may be neutralized with an acid or base at a predetermined concentration, if necessary.

In an exemplary embodiment of the present specification, the aqueous binder may be present in an amount of 2 parts by weight or more and 30 parts by weight or less based on 100 parts by weight of the negative electrode composition.

In another exemplary embodiment of the present specification, the aqueous binder may be included in an amount of 30 parts by weight or less, preferably 25 parts by weight or less, and more preferably 20 parts by weight or less, or may be included in an amount of 2 parts by weight or more, 5 parts by weight or more, and 10 parts by weight or more, based on 100 parts by weight of the negative electrode composition.

In still another exemplary embodiment of the present specification, the binder may have a weight average molecular weight of 100,000 g/mol or more and 1,500,000 g/mol or less.

The negative electrode composition according to the exemplary embodiment may secure characteristics in that mechanical strength is excellent because the weight average molecular weight of the binder satisfies the above range, and the adhesion strength of the negative electrode is excellent because the interaction between molecules is improved. Furthermore, when the above range is satisfied, the viscosity of the aqueous binder may be controlled within an appropriate range, so that when a negative electrode is manufactured using the binder, the negative electrode has characteristics in that the coatability is excellent.

### <Method for preparing negative electrode composition for lithium ion secondary battery>

An exemplary embodiment of the present invention provides a method for preparing a negative electrode composition for a lithium ion secondary battery, the method including: preparing a pre-dispersion solution by dispersing single-walled carbon nanotubes (SWCNTs) as a conductive material and a dispersant; mixing an aqueous binder including (meth)acrylamide (AM) in an amount of 30 wt% or more and 80 wt% or less with respect to 100 wt% of the entire aqueous binder with the conductive material; and adding a negative electrode active material thereto and mixing the resulting mixture, in which the dispersant includes a non-ionic vinyl-based compound.

In the present specification, the pre-dispersion solution is prepared by a method of preparing single-walled carbon nanotubes and a dispersant then preparing the pre-dispersion solution using a high-pressure homogenizer, and the like.

The specific contents of each component in the method for preparing the negative electrode composition for a lithium ion secondary battery are as described above.

According to the method for preparing a negative electrode composition for a lithium ion secondary battery according to the exemplary embodiments, the dispersibility of the conductive material is controlled, the morphology of the single-walled carbon nanotube structure formed by the dispersion is easily maintained, and accordingly, phase stability is improved and service life characteristics may be improved in terms of batteries in the future.

### <Negative electrode slurry>

In an exemplary embodiment of the present invention, provided is a negative electrode slurry including the negative electrode composition for a lithium ion secondary battery and a solvent.

In an exemplary embodiment of the present invention, the solvent may be water, but is not limited thereto.

In the present specification, the solvent may be a solvent which can be combined with the negative electrode composition.

In some cases, when the viscosity of the negative electrode slurry is controlled within a suitable range by appropriately adjusting the specific surface area of the particles in addition to appropriately adjusting the average particle diameter (D₅₀) of the silicon-based active material, the dispersion of constituent components (for example: a conductive material, a binder, a silicon-based active material, and the like) in the slurry may be improved. Accordingly, the contact area between the constituent components is improved, so that the conductive network may be maintained, the capacity retention rate may be increased, and the current density non-uniformity phenomenon during charging/discharging may also be prevented.

### <Negative electrode>

Another exemplary embodiment of the present invention provides a negative electrode including: a current collector layer; and a negative electrode active material layer provided on one surface or both surfaces of the current collector layer, in which the negative electrode active material layer includes the negative electrode slurry or a dried material thereof.

In the present specification, unless otherwise limited, the current collector layer of the negative electrode may be referred to as a negative electrode current collector layer.

In an exemplary embodiment of the present application, a solid content of the negative electrode slurry may satisfy 3 wt% or more and 50 wt% or less.

In another exemplary embodiment, the solid content of the negative electrode slurry may satisfy a range of 3 wt% or more and 50 wt% or less, preferably 5% or more and 45% or less, and more preferably 7 wt% or more and 40 wt% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the slurry solvent can be used without limitation as long as the slurry solvent can dissolve a negative electrode composition, and specifically, water or NMP may be used.

In an exemplary embodiment of the present application, the negative electrode current collector layer generally has a thickness of 1 µm to 100 µm. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium ion secondary battery, in which the negative electrode current collector layer has a thickness of 1 µm or more and 100 µm or less, and the negative electrode active material layer has a thickness of 20 µm or more and 500 µm or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the negative electrode have appropriate ranges.

### <Lithium ion secondary battery>

In an exemplary embodiment of the present invention, provided is a lithium ion secondary battery including: a first electrode; a second electrode; a separator interposed between the first electrode and the second electrode; and an electrolyte, in which any one of the first electrode and the second electrode is the negative electrode.

In the present specification, the first electrode may be a positive electrode and the second electrode may be a negative electrode, and vice versa.

The secondary battery according to an exemplary embodiment of the present specification may include particularly the above-described negative electrode for a lithium ion secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Alternatively, the positive electrode current collector may typically have a thickness of 3 µm to 500 µm, and the adhesion of the positive electrode active material may also be enhanced by forming fine irregularities on the surface of the current collector. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the positive electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the manufacture of a lithium ion secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidone (NMP), propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethylphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell and a battery pack including the same. The battery module and the battery pack include the secondary battery which has high capacity, high rate-limiting properties, and cycle properties, and thus, may be used as a power source of a medium-and-large sized device selected from the group consisting of an electric vehicle, a hybrid electric vehicle, a plug-in hybrid electric vehicle, and a power storage system.

### <Manufacturing method of lithium ion secondary battery>

In another exemplary embodiment of the present invention, provided is a method for manufacturing a lithium ion secondary battery, the method including: preparing a negative electrode slurry by mixing the negative electrode composition for a lithium ion secondary battery with a solvent; applying the negative electrode slurry on one surface or both surfaces of a current collector layer; and drying the current collector layer to which the negative electrode slurry is applied, and the negative electrode composition for a lithium ion secondary battery, the negative electrode slurry, the solvent, the current collector layer, and the application method are the same as described above.

In the present specification, as the drying, a method known in the art, such as air drying, is used.

In the present specification, steps such as rolling applied after the steps included for the method for manufacturing a lithium ion secondary battery are known in the art.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Synthesis Examples: Synthesis of aqueous binder>

### Synthesis Example 1

After acrylamide (AM) and acrylic acid (AA) were mixed at a weight ratio of 40:60 in a reactor equipped with a stirrer, a thermometer, a reflux condenser, and a nitrogen gas inflow tube, a polymerization initiator (ammonium persulfate) was added thereto, and the resulting mixture was reacted at 75°C for 8 hours to prepare an aqueous polymer solution.

Thereafter, a 0.1 molar NaOH aqueous solution was used and dropped into the aqueous polymer solution to neutralize the aqueous solution, and then Aqueous Binder 1 was prepared.

### Synthesis Example 2

Aqueous Binder 2 was prepared in the same manner as in Synthesis Example 1, except that acrylamide (AM) and acrylic acid (AA) were mixed at a weight ratio of 70 : 30.

### Synthesis Example 3

Aqueous Binder 3 was prepared in the same manner as in Synthesis Example 1, except that acrylamide (AM), acrylic acid (AA), and acrylonitrile (AN) were mixed at a weight ratio of 55 : 30 : 15.

### Synthesis Example 4

Aqueous Binder 4 was prepared in the same manner as in Synthesis Example 1, except that acrylamide (AM) and acrylic acid (AA) were mixed at a weight ratio of 80 : 20.

### Comparative Synthesis Example 1

Comparative Binder 1 was prepared in the same manner as in Synthesis Example 1, except that acrylamide (AM) and acrylic acid (AA) were mixed at a weight ratio of 5 : 95.

### Comparative Synthesis Example 2

Comparative Binder 2 was prepared in the same manner as in Synthesis Example 1, except that acrylamide (AM) and acrylic acid (AA) were mixed at a weight ratio of 85 : 15.

### Comparative Synthesis Example 3

Comparative Binder 3 was prepared in the same manner as in Synthesis Example 1, except that acrylamide (AM), acrylic acid (AA), and acrylonitrile (AN) were mixed at a weight ratio of 25 : 60 : 15.

### Comparative Synthesis Example 4

Comparative Binder 4 was prepared in the same manner as in Synthesis Example 1, except that styrene-butadiene rubber (SBR) and carboxymethyl cellulose (CMC) were mixed at a ratio of 2 : 1.

### <Preparation Examples 1 to 3: Preparation of pre-dispersion solutions>

Single-walled carbon nanotubes (SWCNTs) (manufactured by OCSiAl, Tuball) were used as a conductive material, polyvinylpyrrolidone (PVP) (manufactured by Zhangzhou Huafu Chemical, K15), a non-ionic vinyl-based compound, was added thereto as a dispersant, tannic acid (manufactured by Sigma-Aldrich) as a viscosity adjusting agent was added thereto, then SWCNTs : PVP : tannic acid were mixed at a ratio of 1 : 1 : 0.4 as a weight ratio, and then the resulting mixture was subjected to primary dispersion using a high-shear in-line mixer (primary mixing).

Thereafter, a pre-dispersion solution having a specific dispersion particle size and a solid content of 1 wt% was prepared by repeatedly performing circulation while adjusting pressure using a high-pressure homogenizer (manufactured by Micronox, model name: PICOMAX) repeatedly five times (secondary mixing). The dispersion particle size of the single-walled carbon nanotubes was measured using a particle size distribution measuring apparatus manufactured by Malvern Panalytical Ltd. The results are shown in the following Table 1.

The single-walled carbon nanotubes (SWCNTs) and the dispersant were mixed at the ratio shown in the following Table 1 (based on the weight ratio (wt%) with respect to 100 wt% of the negative electrode composition).

### <Examples and Comparative Examples: Manufacture of negative electrode>

As described in the following Table 1, a solvent (water) was added to each negative electrode composition in consideration of coatability and solid content, and the resulting mixture was stirred to prepare a negative electrode slurry.

**[Table 1]**

| Classification | Negative electrode active material Composition | Conductive material | | Binder (Weight ratio) |
|---|---|---|---|---|
| | | SWCNT (Weight ratio) and Particle size distribution (Length) | Dispersant (Weight ratio) | |
| Example 1 | Pure Si (SiOx (x=0)) (100) | SWCNT (0.5) | PVP (0.5) | Aqueous Binder 1 (10) |
| | | Content of | | |
| | | SWCNTs having a length of more than 0 µm and less than 0.2 µm (0.2 parts by weight based on 100 parts by weight of the entire SWCNTs) and Content of SWCNTs having a length of 10 µm or more and less than 100 µm (42 parts by weight based on 100 parts by weight of the entire SWCNTs) | | |
| Example 2 | Pure Si (100) | SWCNT (0.5) | PVP (0.75) | Aqueous Binder 2 (10) |
| | | Same dispersion particle size | | |
| | | as Example 1 | | |
| Example 3 | Artificial graphite + SiOx (0 < x < 2) (Weight ratio of 92:8) (100) | SWCNT (0.5) | PVP (0.75) | Aqueous Binder 2 (10) |
| | | Same dispersion particle size as Example 1 | | |
| Example 4 | Artificial graphite + SiC (90:10) (100) | SWCNT (0.5) | PVP (0.35) | Aqueous Binder 2 (10) |
| | | Same dispersion particle size as Example 1 | | |
| Example 5 | Pure Si (100) | SWCNT (0.5) | PVP (0.5) | Aqueous Binder 3 (10) |
| | | Same dispersion particle size as Example 1 | | |
| Example 6 | Artificial graphite + SiOx (0 < x < 2) (92:8) (100) | SWCNT (0.5) | PVP (0.35) | Aqueous Binder 4 (10) |
| | | Same dispersion particle size as Example 1 | | |
| Comparative Example 1 | Pure Si (100) | SWCNT (0.5) | Cellulose (0.5) | Comparative Binder 1 (10) |
| | | Same dispersion | | |
| | | particle size as Example 1 | | |
| Comparative Example 2 | Pure Si (100) | SWCNT (0.5) | Cellulose dispersant (0.75) | Comparative Binder 4 (10) |
| | | Same dispersion particle size as Example 1 | | |
| Comparative Example 3 | Artificial graphite + SiOx (0 < x < 2) (92:8) (100) | SWCNT (0.5) | Cellulose (0.5) | Comparative Binder 1 (10) |
| | | Same dispersion particle size as Example 1 | | |
| Comparative Example 4 | Artificial graphite + SiC (90:10) (100) | SWCNT (0.5) | Cellulose (0.5) | Comparative Binder 1 (10) |
| | | Same dispersion particle size as Example 1 | | |
| Comparative Example 5 | Pure Si (100) | SWCNT (0.5) | PVP (0.75) | Comparative Binder 2 (10) |
| | | Same dispersion particle size as Example 1 | | |
| Comparative Example 6 | Artificial graphite + SiOx (0 < x < 2) | SWCNT (0.5) | Cellulose (0.7) | Comparative Binder 3 (10) |
| | | Same dispersion | | |
| | (92:8) (100) | particle size as Example 1 | | |
| Comparative Example 7 | Pure Si (100) | SWCNT (0.5) | PVP (0.75) | Comparative Binder 4 (10) |
| | | Same dispersion particle size as Example 1 | | |
| Comparative Example 8 | Artificial graphite + SiC (90:10) (100) | SWCNT (0.5) | Cellulose (0.5) | Aqueous Binder 1 (10) |
| | | Same dispersion particle size as Example 1 | | |
| Reference Example 1 | Pure Si (100) | SWCNT (0.5) | PVP (0.5) | Aqueous Binder 1 (10) |
| | | Content of SWCNTs having a length of more than 0 µm and less than 0.2 µm (15 parts by weight based on 100 parts by weight of the entire SWCNTs) and | | |
| | | Content of SWCNTs having a length of 10 µm or more and less than 100 µm (8 parts by weight based on 100 parts by weight of the entire SWCNTs) | | |
| Reference Example 2 | Artificial graphite + SiC (90:10) (100) | SWCNT (0.5) | PVP (0.5) | Aqueous Binder 2 (10) |
| | | Content of SWCNTs having a length of more than 0 µm and less than 0.2 µm (0 parts by weight based on 100 parts by weight of the entire SWCNTs) and Content of SWCNTs having | | |
| | | a length of 10 µm or more and less than 100 µm (7 parts by weight based on 100 parts by weight of the entire SWCNTs) | | |

### <Experiment Example: Battery characteristic experiment>

A copper foil with a thickness of 15 µm was coated with each of the negative electrode slurries shown in Table 1 and dried, a negative electrode active material layer with a thickness of 48 µm was formed on one surface of the copper foil, and then the copper foil was punched into circular shapes with a diameter of 14 Φ (mm) to manufacture a test negative electrode.

A metal lithium foil with a thickness of 0.3 mm was used as a positive electrode, a porous polyethylene sheet with a thickness of 0.1 mm was used as a separator, and a product obtained by dissolving LiPF₆ and lithium bis(trisfluoromethanesulfonyl)imide (LiTFSI) as lithium salts at a volume ratio of 8:2 at a concentration of about 1 mol/L in a mixed solvent of fluoroethylene carbonate (FEC) and diethyl carbonate (DEC) at a volume ratio of 7:3 was used as an electrolytic solution.

A coin cell for evaluation with a thickness of 2 mm and a diameter of 32 mm was manufactured by sealing the negative electrode, the positive electrode, the separator, and the electrolytic solution in a stainless steel container.

**[Table 2]**

| No. | Experimental Example 1: Initial efficiency (%) | Experimental Example 2: Capacity retention rate (%) |
|---|---|---|
| Example 1 | 91.5 | 83 |
| Example 2 | 91.8 | 87 |
| Example 3 | 90.7 | 81 |
| Example 4 | 93.1 | 85 |
| Example 5 | 91.7 | 85 |
| Example 6 | 93 | 86 |
| Comparative Example 1 | 91.0 | 65 |
| Comparative Example 2 | 90.2 | 66 |
| Comparative Example 3 | 90.2 | 51 |
| Comparative Example 4 | 93.0 | 56 |
| Comparative Example 5 | 91.5 | 68 |
| Comparative Example 6 | 93.7 | 71 |
| Comparative Example 7 | 91.4 | 67 |
| Comparative Example 8 | 93.2 | 74 |
| Reference Example 1 | 91.8 | 76 |
| Reference Example 2 | 93.0 | 71 |

- Initial efficiency (%): the coin cell was charged with a constant current of 0.05 C until the voltage reached 0.01 V, and then discharged with a constant current of 0.05 C until the voltage reached 1.5 V to obtain each of a discharge capacity and an initial efficiency, and they are shown as a value of (discharge capacity/charge capacity) x 100(%).
- Capacity retention rate (%): was calculated based on 30 cycles by charging a coin cell with a constant current of 0.05 C until the voltage reached 0.01 V, discharging the coin cell with a constant current of 0.05 C until the voltage reached 1.5 V, and carrying out the cycle characteristics in the same voltage range as above at a constant current of 0.2 C to conduct a capacity retention rate test.

As shown in Table 2, in Examples 1 to 6, an aqueous binder including 30 wt% or more and 80 wt% or less of (meth)acrylamide based on the entire aqueous binder was used, and a non-ionic vinyl-based compound (PVP) was used as a dispersant. As a result, all initial efficiencies were more than 90%, and at the same time, all capacity retention rates were shown to be 80% or more.

In contrast, even though a non-ionic vinyl-based compound was used as a dispersant, Comparative Example 5 achieved a high initial efficiency of 91.5% using a binder with a (meth)acrylamide content out of the range of the present invention (that is, 30 wt% or more and 80 wt% or less with respect to 100 wt% of the entire aqueous binder), but showed a capacity retention rate of 68%.

Further, even though a non-ionic vinyl-based compound was used as a dispersant, Comparative Example 7 achieved a high initial efficiency of 91.4% because a binder that is a mixture of styrene-butadiene rubber (SBR) and carboxymethyl cellulose (CMC), which does not include (meth)acrylamide, was used, but showed a capacity retention rate of 67%.

In addition, even though an aqueous binder with a (meth)acrylamide content satisfying the range of the present invention was used, Comparative Example 8 achieved a high initial efficiency of 93.2% because a non-ionic vinyl-based compound was not used as a dispersant, but showed a capacity retention rate of 74%.

Furthermore, all of Comparative Examples 1 to 4 and 6 showed a high initial efficiency of more than 90% because a non-ionic vinyl-based dispersant was not used by using not only a binder with a (meth)acrylamide content out of 30 wt% or more and 80 wt% or less with respect to 100 wt% of the entire aqueous binder, but also a cellulose dispersant, but Comparative Examples 1 to 4 and 6 showed a capacity retention rate of 65%, 66%, 51%, 56%, and 71%, respectively.

Therefore, it can be seen that in consideration of Comparative Examples 5 and 7, when the (meth)acrylamide content of the aqueous binder is out of a range of 30 wt% or more and 80 wt% or less, the effect on the capacity retention rate is large to the extent that (meth)acrylamide is not included.

Further, it can be seen that when Comparative Example 5 is compared with Comparative Example 8, the (meth)acrylamide content factor has a greater influence on improving the capacity retention rate than the factor of the dispersant, and it can be seen from Comparative Examples 1 to 4 and 6 that when the above two factors are not satisfied, the deterioration in the capacity retention rate becomes serious.

Comparing Reference Examples 1 and 2 with Examples 1 and 4, it can be seen that a difference in capacity retention rate appears according to whether the particle size distribution range of the single-walled carbon nanotubes according to the present invention is satisfied.

## Claims

1. A negative electrode composition for a lithium ion secondary battery, comprising: a negative electrode active material; a conductive material; and an aqueous binder,
wherein the conductive material comprises a pre-dispersion solution comprising single-walled carbon nanotubes (SWCNTs) and a dispersant,
the aqueous binder comprises (meth)acrylamide (AM) in an amount of 30 wt% or more and 80 wt% or less with respect to 100 wt% of the entire aqueous binder, and
the dispersant comprises a non-ionic vinyl-based compound.

2. The negative electrode composition of claim 1, wherein the negative electrode active material comprises one or more selected from the group consisting of a silicon-based active material and a carbon-based active material.

3. The negative electrode composition of claim 2, wherein the silicon-based active material comprises one or more of SiOx, wherein x=0, SiOx, wherein 0<x<2, SiC, and a Si alloy.

4. The negative electrode composition of claim 2, wherein when the negative electrode active material is composed of a silicon-based active material alone, the silicon-based active material comprises one or more selected from the group consisting of SiOx, wherein x=0, and SiOx, wherein 0<x<2, and comprises 70 parts by weight or more of the SiOx, wherein (x=0), based on 100 parts by weight of the silicon-based active material.

5. The negative electrode composition of claim 2, wherein the carbon-based active material comprises at least one selected from the group consisting of artificial graphite, natural graphite, hard carbon, and soft carbon.

6. The negative electrode composition of claim 2, wherein when the negative electrode active material comprises a silicon-based active material and a carbon-based active material, a weight ratio between the silicon-based active material and the carbon-based active material is in a range of 2 : 98 to 30 : 70.

7. The negative electrode composition of claim 1, wherein the non-ionic vinyl-based compound comprises one or more selected from the group consisting of polyvinyl pyrrolidone (PVP) and polyvinyl butyral (PVB).

8. The negative electrode composition of claim 1, wherein the aqueous binder is a copolymer comprising (meth)acrylamide (AM) as a first repeating unit and (meth)acrylic acid (AA) as a second repeating unit.

9. The negative electrode composition of claim 8, wherein the aqueous binder is a copolymer further comprising (meth)acrylonitrile (AN) as a third repeating unit.

10. A negative electrode slurry comprising the negative electrode composition of any one of claims 1 to 9 and a solvent.

11. A negative electrode comprising: a current collector layer; and a negative electrode active material layer provided on one surface or both surfaces of the current collector layer, wherein the negative electrode active material layer comprises the negative electrode slurry according to claim 10 or a dried material thereof.

12. A lithium ion secondary battery comprising: a first electrode;
a second electrode;
a separator interposed between the first electrode and the second electrode; and
an electrolyte,
wherein any one of the first electrode and the second electrode is the negative electrode according to claim 11.
